# EUROPÄISCHE PATENTANMELDUNG

(11) **EP 2 918 407 A1**
(43) Veröffentlichungstag der Anmeldung: **16.09.2015**
(21) Anmeldenummer: 14158522.4
(22) Anmeldetag: 10.03.2014
(51) Int. Cl.: B32B 5/02, B32B 5/28, B32B 27/12

(54) **FASERKUNSTSTOFFVERBUND, SOWIE VERFAHREN UND LAGENAUFBAU ZU DESSEN HERSTELLUNG**

(71) Anmelder: BASF SE, 67056 Ludwigshafen (DE); Haluszka, Jan, 81673 München (DE)
(72) Erfinder: Haluszka, Jan, 81673 München (DE)

(57) **Zusammenfassung**

Die Vorliegende Erfindung betrifft einen Faserkunststoffverbund, welcher mindestens eine Faserlage, einen Matrixwerkstoff und mindestens einen Kunststoffbereich umfasst, wobei
der Kunststoffbereich aus einem thermoplastischen Kunststoff besteht. Ferner betrifft die Erfindung einen Lagenaufbau (10) zur Herstellung eines Faserkunststoffverbunds (12), wobei der Lagenaufbau mindestens eine Faserlage (30, 32, 34, 36) und mindestens ein Kunststoffelement (21) umfasst, wobei das Kunststoffelement (21) ein Thermoplast ist. Darüber hinaus betrifft die Erfindung ein Verfahren zur Herstellung eines Faserkunststoffverbunds (12) mit einem thermoplastischen Kunststoffbereich (23), die Schritte umfassend: Einbringen eines Lagenaufbaus (10) in eine Form; und Imprägnieren des Lagenaufbaus (10) mit einem thermoplastischen Matrixwerkstoff.

## Beschreibung

### Technisches Gebiet

Die vorliegende Erfindung betrifft einen Faserverbund welcher mindestens zwei Faserlagen, einen Matrixwerkstoff und mindestens einen Kunststoffbereich umfasst, sowie einen Lagenaufbau und ein Verfahren zur Herstellung des Faserverbunds.

### Stand der Technik

Bei Faserverbundwerkstoffen handelt es sich um künstlich erzeugte Werkstoffe, welche in der Regel aus den Grundbestandteilen Faser, Matrix und Schlichte gebildet sind. Dabei werden die im Vorfeld mit der Schlichte benetzten Fasern mit der Matrix imprägniert, wodurch ein Faserverbund entsteht. Die Fasern können dabei in den unterschiedlichsten Formen vorkommen. Zu bekannten verarbeiteten Faserformen gehören Unidirektionalgelege, Gewebe, Prepregs, Wirrfasern, Kurzfasern und dergleichen. Bekannte Fasermaterialien sind zum Beispiel Glasfasern, Kohlefasern, Aramidfasern, Polyethylenfasern, Metallfasern, sowie Fasern aus natürlichen Rohstoffen, wie Flachs-, Hanf- und Basaltfasern.

Die Schlichte dient insbesondere der Verbesserung der Fasermatrixhaftung. Dabei hängt die Wahl der Schlichte von der Art der Fasern beziehungsweise der Matrix ab.

Die wesentlichen Funktionen der Matrix als Bettungswerkstoff bestehen in dem Schutz, der Stützung sowie der Formgebung des Fasermaterials. Mechanisch gesehen verhindert die Matrix das Knicken der Fasern bei Druckbelastung und sorgt für die Kraftübertragung unter den Fasern. Gängige Matrix- beziehungsweise Bettungswerkstoffe sind Kunststoffe, Metalle, Glas, Keramiken und Kohlenstoff. Dabei liegt der Anwendungsschwerpunkt bislang bei den Kunststoffmatrizen.

Zur Herstellung eines Faserverbunds sind verschiedene Laminierverfahren bekannt. Diese lassen sich in drei Kategorien einteilen. So sind das manuelle Verfahren, zu welchem insbesondere das Handauflegeverfahren gehört, das halbmechanische Verfahren (z.B. Injektionsverfahren) und das vollmechanische Laminierverfahren (z.B. Wickeln) bekannt.

Zu den halbmechanischen Verfahren gehört in erster Linie das Injektionsverfahren, bei dem die Harzmasse nach Einbringen des Fasermaterials in die geschlossene und gedichtete Vorrichtung injiziert wird. Bekannte Injektionsverfahren sind das Resin Transfer Molding (RTM)- und das Reaction Injection Molding (RIM)-Verfahren.

Vergleichbare Verfahren, welche deutlich geringere Werkzeugkosten aufweisen, dafür aber mit einer geringeren reproduzierbaren Bauteilqualität einhergehen, sind das Vakuum-Infusionsverfahren sowie das Differential Pressure Resin Transfer Molding (DP-RTM)-Verfahren. Bei diesem kann auf ein massives Werkzeug, wie es beispielsweise beim RTM-Verfahren zum Tragen kommt, verzichtet werden. bei der Vakuum-Infusion wird das trockene Fasermaterial in eine mit Trennmitteln beschichtete Form eingelegt. Anschließend wird das Bauteil mit einer Folie abgedeckt, die am Formrand luftdicht aufgeklebt wird. Durch Absaugen der Luft presst sich die Folie auf das Laminat und drückt es gegen die Form. Herkömmliche Pumpen erzeugen üblicherweise ein Vakuum von ca. 0,9 bar, was einem Pressdruck von 9 t/m² entspricht.

Die Kunststoffmatrizen lassen sich nach dem Aufbau ihrer Makromoleküle in Thermoplaste, Duromere und Elastomere einteilen. Wobei letzteren in Bezug auf Faserverbundwerkstoffe eine geringere Bedeutung zukommt.

Bei den Thermoplasten handelt es sich um linear oder verzweigt aufgebaute Makromoleküle, die bei Erwärmung bis zur Fließbarkeit erweichen und sich bei Abkühlung wieder verfestigen. Sie sind also in der Lage, reversible Zustandsänderungen zu durchlaufen. Daher sind Thermoplaste beliebig oft aufschmelzbar und verschweißbar. Je nach Kettenaufbau liegen Thermoplaste im amorphen oder teilkristallinen Zustand vor. Beispielhaft seien Polyamid, Polyethylen, Polyvinylchlorid und Polyurethan genannt.

Duromere sind räumlich eng vernetzte Makromoleküle, die sich auch bei hohen Temperaturen nicht plastisch verformen lassen, nach dem irreversiblen Abhärtungsprozess, also in einem starren, auch sprödem, amorphem Zustand vorliegen. Ursache der äußerst geringen Verformbarkeit ist die Tatsache, dass wegen der räumlichen chemischen Bindung der Moleküle keine gegenseitige Verschiebung der Polymerstruktur mehr möglich ist. Zu den Duromeren gehören zum Beispiel Phenol-Formalaldehyd-Harze, Polyesterharze und Epoxidharze. Thermoplastische Matrizen, insbesondere Polyamide, können erheblich zur Verbesserung der mechanischen Eigenschaften des Faserverbunds beitragen. So können insbesondere die Festigkeit und Schlagzähigkeit des Faserverbunds auf den Anwendungsfall abgestimmt werden. Die Verwendung von Polyamid als Bettungswerkstoff hat in der Vergangenheit jedoch den Nachteil mit sich gebracht, dass durch das Quellverhalten, das heißt die Wasseraufnahme durch das Polyamid, die Faser Matrix Anbindung durch einen hohen Schrumpf bei der Polymerisation abnimmt. Dadurch ist zwischen der Matrix und den Fasern ein mikroskopisch kleiner Spalt verblieben, über welchen aufgrund des Kapillareffekts Feuchtigkeit ins Innere des Faserverbunds gelangt ist. Dieses Problem kann jedoch aufgrund der Verwendung neu entwickelter Schlichten überwunden werden.

Bei der Infusion beziehungsweise Injektion der Matrix kann gerade bei großen Bauteilen oder Bauteilen mit einer komplexen Geometrie eine ungleichmäßige beziehungsweise unvollständige Imprägnierung des Faserhalbzeugs auftreten. Dies kann zu trockenen, spröden Bereichen im Faserkunststoffverbund führen, welche mechanische Schwachstellen darstellen, und somit zum Ausschuss des Faserkunststoffverbundbauteils führen.

Um diesem Problem zu begegnen, kommen bei Injektions- beziehungsweise Infusionsverfahren so genannte Fließhilfen zum Einsatz, welche eine vollständige Imprägnierung des Faserhalbzeugs in der Form gewährleisten sollen. Eine der einfachsten Lösungen ist es, statt einem Harzanguss mehrere Harzangüsse bereitzustellen. Dies hat jedoch den Nachteil, dass mit jedem weiteren Anguss die Komplexität des Werkzeugs beziehungsweise der Vorrichtung zur Herstellung steigt, was mit einem konstruktiven sowie finanziellen Aufwand verbunden ist.

Andere bekannte Lösungen gehen auf das Bereitstellen einer Linieninjektion oder einer Fließkanalinjektion zurück. Bei der Linieninjektion tritt das Harz (Matrix) vom Rand des Faserhalbzeugs aus in dieses ein. Die Fließkanalinjektion ist insbesondere aus dem RTM-Verfahren bekannt, wobei der Fließkanal in Form einer Nut als Negativ im Werkzeug gebildet ist, durch welche das Harz strömen kann, um das gesamte Faserhalbzeug zu imprägnieren.

### Darstellung der Erfindung

Ausgehend von dem bekannten Stand der Technik ist es Aufgabe der vorliegenden Erfindung, einen Faserkunststoffverbund mit verbesserter Schlagzähigkeit sowie ein Verfahren zu dessen Herstellung bereitzustellen.

Diese Aufgabe wird durch einen Faserkunststoffverbund mit den Merkmalen des Anspruchs 1 gelöst. Vorteilhafte Ausgestaltungen dieses Faserkunststoffverbundes ergeben sich aus den Unteransprüchen.

Entsprechend wird ein Faserkunststoffverbund, welcher mindestens eine Faserlage, einen Matrixwerkstoff und mindestens einen Kunststoffbereich umfasst, angegeben. Erfindungsgemäß besteht der Kunststoffbereich aus einem thermoplastischen Kunststoff.

Dadurch kann eine erheblich Verbesserung der mechanischen Eigenschaften des Faserkunststoffverbunds erzielt werden. Dies wird durch den gleichen Effekt ermöglicht, welcher beispielsweise bei Verbundglas auftritt. Dabei wird beispielsweise eine Verbesserung der Durchwurf-, Durchbruch- oder Durchschusshemmung von Glas erreicht, indem zwischen mindestens zwei Glasscheiben eine Klebefähige Zwischenschicht aus Kunststoff eingebracht wird. Ein Ähnlicher Effekt kann vorliegend auch in einem Faserkunststoffverbund mit einem Kunststoffbereich, welcher aus einem thermoplastischen Kunststoff besteht, erzielt werden. Dabei wird eine auf den Faserkunststoffverbund einwirkende mechanische Energie beispielsweise von einer Faserlage als Deckschicht, die vergleichsweise spröde Eigenschaften aufweist, auf den Kunststoffbereich übertragen und so gleichmäßiger auf den Faserkunststoffverbund verteilt. Dabei kann der Kunststoffbereich ohne Verschlechterung der Stabilität des Faserkunststoffverbunds und ohne nennenswerte Gewichtszunahme integriert werden.

Insbesondere können die Festigkeit und Schlagzähigkeit des Faserkunststoffverbunds auf den entsprechenden Anwendungsfall abgestimmt werden.

Drüber hinaus kann die Erhöhung der Schlagzähigkeit des Faserkunststoffverbunds neben dem Kunststoffbereich aus einem thermoplastischen Kunststoff zusätzlich durch Faserlagen aus Metallfasern, insbesondere Stahlfasern oder Aluminiumfasern erreicht werden. Metallfasern können zusätzlich die Permeabilität des Faserkunststoffverbunds verbessern.

In einer weiter bevorzugten Ausführungsform ist der Matrixwerkstoff ein thermoplastischer Kunststoff, bevorzugt ein reaktiver thermoplastischer Kunststoff, besonders bevorzugt Polyamid, ganz besonders bevorzugt anionisches Polyamid 6.

Dadurch, dass der Matrixwerkstoff wie auch der Kunststoffbereich aus thermoplastischem Kunststoff besteht, wird eine chemische Verbindung zwischen dem Matrixwerkstoff und dem Kunststoffbereich begünstigt. So kann durch den thermoplastischen Matrixwerkstoff in Verbindung mit dem thermoplastischen Kunststoffbereich ein einheitlicher thermoplastischer Bereich in dem Faserverbund gebildet werden.

Die Verwendung von reaktiven thermoplastischen Kunststoffen hat den Vorteil, dass diese während der Imprägnierung des Faserhalbzeugs polymerisiert werden können. Aufgrund dieser in situ Polymerisation kann in Verbindung mit geeigneten Schlichten eine verbesserte Faser-Matrixanbindung erzielt werden. Als reaktive Thermoplaste können beispielsweise Polymethylmethacrylat (PMMA), Polybutyleneterephthalat (PBT), Polyethyleneterephtalat (PET), Polycarbonat (PC), Polyetheretherketon (PEEK), Polyetherketon (PEK), Polyethersulfon (PES), Polyphenylenesulfid (PPS), Polyethylenenaphthalat (PEN), Polybutylenenaphthalat (PBN) und Polyamid (PA) zum Einsatz kommen. Unter Verwendung von reaktiven thermoplastischen Kunststoffen können die Festigkeits- und Steifigkeitseigenschaften, insbesondere die Schlagzähigkeit, des Faserkunststoffverbunds verbessert werden.

Durch die Verwendung von Polyamid als Matrixwerkstoff lassen sich die mechanischen Eigenschaften des Faserverbunds hinsichtlich dessen Festigkeit und Schlagzähigkeit verbessern. Durch die Auswahl des entsprechenden Polyamids können diese Parameter auf den jeweiligen Anwendungsfall abgestimmt werden.

Die Bereitstellung von anionischem Polyamid 6 (auch bekannt unter der Abkürzung APA6) als Matrixwerkstoff kann dadurch erreicht werden, dass einem Lagenaufbau zur Herstellung des Faserkunststoffverbunds zunächst Caprolactam injiziert wird. Durch eine sich der Injizierung unmittelbar anschließende anionische Ringöffnungspolymerisation des Caprolactams, kann unter Ausschluss von Feuchtigkeit und anderen protischen Verunreinigungen anionisches Polyamid 6 gebildet werden. Der fertige Faserkunststoffverbund ist folglich mit einer anionischen Polyamid 6-Matrix ausgebildet. Dabei ist von besonderem Vorteil, dass das zunächst in Form von Caprolactam injizierte Matrixmaterial eine besonders niedrige Viskosität aufweist, was insbesondere für die Imprägnierung des Faserhalbzeugs von Vorteil ist. Darüber hinaus verleihen die langen Molekülketten des anionischen Polyamid 6 dem Faserverbund eine erhöhte Schlagzähigkeit sowie eine erhöhte Verschleißfestigkeit.

In einer bevorzugten Ausgestaltung ist mindestens ein Kunststoffbereich zwischen mindestens zwei Faserlagen angeordnet.

Dadurch weist der Faserkunststoffverbund einen Bereich mit einer geringeren Faserdichte auf, wodurch eine partielle Erhöhung der Schlagzähigkeit ermöglicht werden kann.

In einer bevorzugten Weiterbildung verläuft die Nulllinie des Faserkunststoffverbunds durch einen Kunststoffbereich, bevorzugt durch das Zentrum des Kunststoffbereichs.
Die Nulllinie im Sinne der Mechanik steht für die Schicht eines Balkenquerschnitts, deren Länge sich bei einem Biegevorgang nicht ändert.

Dadurch ist gewährleistet, dass bei mechanischer Beanspruchung des Faserkunststoffverbunds, insbesondere bei der Einwirkung von Biegekräften, der Kunststoffbereich, d.h., der faserarme Bereich des Faserkunststoffverbunds, in Bezug auf die restlichen Lagen des Faserkunststoffverbunds das geringste Maß an Längenänderung erfährt. Entsprechend schränkt die Anordnung des Kunststoffbereichs im Bereich der Nulllinie des Faserkunststoffverbunds die Belastung des Faserkunststoffverbunds im Bereich des Kunststoffbereichs auf ein Mindestmaß ein. Da für den Lagenaufbau des Faserkunststoffverbunds allgemein gilt, je größer die Entfernung zur Nulllinie, desto höher der Beitrag zur Biegesteifigkeit, sollten die Lagen, die die Hauptbiegebelastungen aufnehmen sollen, möglichst nahe an der Außenfläche des Faserkunststoffverbunds positioniert werden.

Darüber hinaus wirkt sich die Anordnung des Kunststoffbereichs in der Nulllinie auch vorteilhaft auf die Schlagzähigkeit des Faserkunststoffverbunds aus.

In einer weiter bevorzugten Ausgestaltung ist der Kunststoffbereich an einem außenliegenden Bereich des Faserkunststoffverbunds angeordnet ist.

Dadurch kann der Kunststoff als mechanischer Schutz für die darunter liegenden Fasern dienen. Insbesondere in Form einer Kunststoffschicht kann dieser so als Schutzschicht gegen Schlagbeanspruchungen des Faserkunststoffverbunds dienen.

In einer bevorzugten Ausführungsform bildet der Kunststoffbereich eine eigene Lage des Faserkunststoffverbunds, wobei der Kunststoffbereich bevorzugt eine homogene Lage ist.

Dadurch kann die Stapelfolge der Faserlagen des Faserkunststoffverbunds von einem Kunststoffbereich unterbrochen werden. Entsprechend liegt ein quasi Sandwich vor, welcher sich durch zwei Bereiche mit einem Faseranteil, den Faserlagen, und einem reinen thermoplastischen Matrixbereich, dem Kunststoffbereich, auszeichnet. Dies ist beispielsweise der Fall, wenn der Kunststoffbereich in der Nulllinie angeordnet ist. Insbesondere erstreckt sich der Kunststoffbereich aufgrund dieser Ausgestaltung über die gesamte Fläche des Faserkunststoffverbunds. Somit kann eine ganzflächige Erhöhung der Schlagzähigkeit des Faserkunststoffverbunds erfolgen.

Bildet der Kunststoffbereich eine äußere Lage des Faserkunststoffverbunds, kann dieser somit als ganzflächiger Schlagschutz für den Faserkunststoffverbund dienen.

In einer Weiterbildung umfasst der Kunststoffbereich den Matrixwerkstoff und das Kunststoffelement.

Dadurch kann der Kunststoffbereich eine feste Verbindung von Teilen des ungelösten Kunststoffelements mit der eingebrachten Matrix aufweisen. Der Kunststoffbereich kann im Fall von unterschiedlichen Thermoplasten von Matrixmaterial und Kunststoffelement inhomogen sein. In diesem Fall stellen die gelösten Bereichen des Kunststoffelements Mischbereiche da. Alternativ kann beispielsweise bei identischen Materialien von Matrix und Kunststoffelement ein homogener Kunststoffbereich mit homogenen mechanischen Eigenschaften gebildet werden.

Das nicht gelöste Teil des Kunststoffelements kann entsprechend auch noch im Kunststoffbereich seine ursprüngliche Form aufweisen. So kann die Form des Kunststoffelements derart ausgestaltet sein, dass sie über die Materialeigenschaften des Kunststoffs hinaus zur Erhöhung der Schlagzähigkeit des Bauteils beitragen kann.

Die oben genannte Aufgabe wird auch durch einen Lageaufbau mit den Merkmalen des Anspruchs 8 gelöst. Vorteilhafte Ausgestaltungen dieses Lagenaufbaus ergeben sich aus den Unteransprüchen.

Entsprechend ist ein Lagenaufbau zur Herstellung eines Faserkunststoffverbunds angegeben, wobei ein Kunststoff zwischen mindestens zwei Faserlagen angeordnet ist. Dabei ist der Kunststoff erfindungsgemäß ein Thermoplast.

Dies bewirkt zunächst, dass ein Matrixwerkstoff nach erfolgter Infusion beziehungsweise Injektion in den Lagenaufbau mit diesem eine Verbindung mit dem Kunststoff eingehen kann. Ferner kann dadurch der Kunststoff bei der Infusion beziehungsweise Injektion des Matrixwerkstoffes von diesem ganz oder teilweise gelöst werden. Dies ermöglicht, dass der Matrixwerkstoff durch den zuvor gelösten Bereich des Kunststoffs strömen kann, um so die mindestens eine Faserlage zu imprägnieren. Somit kommt dem Kunststoff die Funktion einer Fließhilfe zu.

Besonders vorteilhaft an einer derartigen Fließhilfe ist, dass sie im Inneren des Lagenaufbaus angeordnet ist, und somit nicht nachträglich entfernt werden muss. Auch besteht für einen auf diese Weise erzeugten Faserkunststoffverbund keine äußere optische Beeinträchtigung aufgrund der Fließhilfe.

In einer weiteren bevorzugten Ausgestaltung ist der Kunststoff ein Vollmaterial, unidirektionales Gelege, Gitter, Gewirk, bevorzugt Abstandsgewirk, Gestrick, Geflecht und/oder ein Gewebe.

Dadurch kann der Kunststoff auch aufgrund seiner Form zu den Festigkeitseigenschaften, insbesondere der Schlagzähigkeit des Faserkunststoffverbunds beitragen. Dies kann insbesondere dann eine Rolle spielen, wenn der thermoplastische Kunststoff bei der Infusion beziehungsweise Injektion des Matrixwerkstoffs nicht vollständig in Lösung geht, d.h., nur leicht angelöst wird. Somit kann die verbleibende Form des Kunststoffs in Form von einem Vollmaterial, unidirektional gerichteten Gelege, Gitter, Gewirk, bevorzugt Abstandsgewirk, Gestrick, Geflecht und/oder einem Gewebe über die Materialeigenschaften des Kunststoffs hinaus zur Festigkeit, insbesondere der Schlagzähigkeit des Faserkunststoffverbunds beitragen.

In einer bevorzugten Weiterbildung besteht der Kunststoff aus mindestens einem Monofilament.

Dadurch kann ein ähnlicher Effekt wie bei der Verwendung von herkömmlichen Fließhilfen wie Harzkanälen beziehungsweise Fließkanälen genutzt werden. Durch die Infusion beziehungsweise Injektion des Matrixwerkstoffes kann das mindestens eine Monofilament in Lösung gehen und somit zur Imprägnierung des Faserhalbzeugs beitragen. Die Monofilamente können dabei in beliebiger Anordnung zwischen den Faserlagen bereitgestellt werden. Die Schlagzähigkeit kann dann durch die Wahl der Anzahl sowie der Beabstandung der einzelnen Monofilamente voneinander eingestellt werden.

Die Verwendung von mindestens einem Monofilamentkunststoff führt bei teilweisem in Lösung gehen des Monofilaments dazu, dass der Matrixwerkstoff mit dem Monofilament eine feste Verbindung eingehen kann.

Darüber hinaus können die Monofilamente aus Kunststoff auch in eine Faserlage integriert sein. Eine solche Faserlage kann dann in Form von einem Hybridgewebe, Hybridgelege, Hybridgewirk und dergleichen bereitgestellt werden. Die Hybridfaserlage weist dann neben Verstärkungsfasern Monofilamente aus Kunststoff auf, wodurch eine Faserlage mit erhöhter Schlagzähigkeit erhalten werden kann.

In einer bevorzugten Ausführungsform bildet der Kunststoff eine eigene Lage des Lagenaufbaus.

Entsprechend kann eine ganzflächige Imprägnierung des Faserhalbzeugs beziehungsweise der Faserlagen bei der Infusion beziehungsweise der Injektion des Matrixwerkstoffs sichergestellt werden. Somit können trockene Stellen, d.h. harzarme Bereiche, welche beispielsweise bei komplexen Geometrien oder aufwändigen Detailbereichen des Faserkunststoffverbunds entstehen können, vermieden werden.

Dadurch, dass sich die Fließfront des Harzes über die gesamte Fläche des Faserkunststoffverbunds ausbreiten kann, kann eine erhöhte Infusionsgeschwindigkeit beziehungsweise Injektionsgeschwindigkeit erhalten werden. Dem Kunststoff in Lagenform kommt somit neben der Funktion der Erhöhung der Schlagzähigkeit des Faserkunststoffverbunds die zusätzliche Funktion einer flächenförmigen Fließhilfe zu.

In einer weiter bevorzugten Ausführungsform weist das Kunststoffelement Polyamid, bevorzugt anionisches Polyamid 6 auf.

Dadurch können dem Faserkunststoffverbund erhöhte Festigkeits- und insbesondere erhöhte Schlagzähigkeitseigenschaften verliehen werden, was auf die langen Molekülketten sowie hohen Molmassen des anionischen Polyamid 6 zurückzuführen ist. Über das anteilige Verhältnis von Faserlagen, Matrixwerkstoff und Kunststoff können die mechanischen Eigenschaften des Faserkunststoffverbunds auf den jeweiligen Anwendungsfall abgestimmt werden.

Ferner kann bei der Infusion beziehungsweise der Injektion des Matrixwerkstoffs das Polyamid 6 ganz oder teilweise in Lösung gehen, und im gelösten Zustand selbst zur Imprägnierung der Faserlagen beitragen.

In einer bevorzugten Weiterbildung umfasst das Kunststoffelement Polymere, organische oder anorganische Füllstoffe und/oder Verstärkungsstoffe.

Dies kann zur Verbesserung der Verträglichkeit der Komponenten, wie zum Beispiel Kunststoff-Faserlagen und/oder Kunststoff-Matrixwerkstoff beitragen. Ferner kann dadurch die Viskosität des nach der Infusion beziehungsweise Injektion ganz oder teilweise in Lösung gehenden Kunststoffs herabgesetzt werden. Wenn das Kunststoffelement bei der Infusion des Matrixwerkstoffs teilweise in Lösung geht, kann die Viskosität der entstehenden Schmelze abhängig von den vorhandenen Polymeren eingestellt werden. Dies wird insbesondere durch die Zugabe von Polymeren, wie zum Beispiel Polystyrol, Styrol-Copolymersiate, insbesondere Styrol-Acrylnitril- Copolymere (SAN), Acrylnitril-Butadien-Styrol-Copolymere (ABS) oder Styrol-Butadien- Copolymere (SB), Polyphenylenoxidether, Polyolefine, insbesondere Polyethylen (HDPE (high-density-polyethylene), LDPE (low-density-polyethylene), Polypropylen oder Polybuten-1 , Polytetrafluorethylen, Polyester, insbesondere Polyethylenterephthalat (PET); Polyamide, Polyether, insbesondere Polyethylenglykol (PEG), Polypropylenglykol oder Polyethersulfone (PESU oder PES); Polymere aus Vinylgruppen, insbesondere Polyvinylchlorid, Polyvinylidenchloride, Polystryrol, schlagzähmodifiziertes Polystyrol, Polyvinylcarbazol, Polyvinylacetat oder Polyvinylalkohol, Polyisobutylene, Polybutadien und Polysulfone erreicht.

Durch die Zugabe von organischen oder anorganischen Füll- und/oder Verstärkungsstoffen können Kenngrößen, wie die Schlagzähigkeit und/oder die Feuchtigkeitsaufnahme des Faserkunststoffverbunds zusätzlich beeinflusst werden. Dabei kommen als anorganische Füll- und/oder Verstärkungsstoffe insbesondere Kaolin, Kreide, Wollastonit, Talkum, Calciumcarbonat, Silikate, Titandioxid, Zinkoxid, Graphit, Graphene, Glaspartikel (z.B. Glaskugeln), nanoskalige Füllstoffe,wie Kohlenstoff-Nanoröhren, car- bon nanotubes), carbon black, Schichtsilikate, nanoskalige Schichtsilikate, nanoskaliges Aluminiumoxid (Al203), nanoskaliges Titandioxid (Ti02) und/oder nanoskaliges Siliciumdioxid (Si02) in Betracht.

In einer weiter bevorzugten Ausgestaltung umfasst das Kunststoffelement faserförmige Füllstoffe und/oder Verstärkungsstoffe.

Dadurch kann der Beitrag des Kunststoffs bezüglich der Festigkeits- und Steifigkeitseigenschaften des Faserkunststoffverbundes erhöht werden. Dabei kommen als faserförmige Füll- und/oder Verstärkungsstoffe beispielsweise Fasern, wie Kohlenstofffasern, Glasfasern, Aramidfasern, Borfasern, Keramikfasern, Kieselsäurefasern, Metallfasern, insbesondere Stahlfasern oder Aluminiumfasern, Polyesterfasern, Nylonfasern, Plexiglasfasern, Sisalfasern und andere bekannte Natur- oder Kunststofffasern in Betracht.

Die oben genannte Aufgabe wird auch durch ein Verfahren mit den Merkmalen des Anspruchs 15 gelöst. Eine vorteilhafte Ausgestaltung dieses Verfahrens ergibt sich aus dem Unteranspruch.

Entsprechend wird ein Verfahren zur Herstellung eines Faserkunststoffverbunds, bevorzugt gemäß einem der Ansprüche 1 bis 7 angegeben. Das Verfahren umfasst den Schritt des Einbringens eines Lagenaufbaus, bevorzugt gemäß einem der Ansprüche 8 bis 14 in eine Form und den Schritt des Imprägnierens des Lagenaufbaus mit einem thermoplastischen Matrixwerkstoff.

Mit Hilfe dieses Verfahrens werden die oben bezüglich des Faserkunststoffverbunds und des Lagenaufbaus dargestellten Vorteile erreicht.

In einer bevorzugten Weiterbildung wird der Lagenaufbau mit Caprolactam imprägniert, bevorzugt infusioniert oder injiziert.

Dadurch kann das Caprolactam, welches unter Ausschluss von Feuchtigkeit und anderen protischen Verunreinigungen polymerisieren kann, bei der Infusion beziehungsweise Injektion und der damit einhergehenden Imprägnierung der Faserlagen im Faserhalbzeug durch Ringöffnungspolymerisation zu anionischem Polyamid 6 umgewandelt werden. Wobei die dabei entstehenden langen Molekülketten und hohen Molmassen des anionischen Polyamid 6 die Grundlage für die hohen Festigkeitseigenschaften des Matrixwerkstoffs bilden können. Insbesondere kann dem Faserkunststoffverbund dadurch eine erhöhte Schlagzähigkeit verliehen werden.

In einer bevorzugten Ausgestaltung geht ein Kunststoffelement des Lagenaufbaus mit dem Matrixwerkstoff ganz oder teilweise in Lösung.

In einer weiter bevorzugten Ausführungsform sind mindestens ein Kunststoffelement und der Matrixwerkstoff so gewählt, dass sie aus dem gleichen Material bestehen.

Dadurch wird ermöglicht, dass der Matrixwerkstoff nach der Infusion beziehungsweise Injektion mit dem Kunststoff teilweise beziehungsweise vollständig in Lösung geht. Dies wirkt sich vorteilhaft auf die Imprägnierung des Faserhalbzeugs aus. Darüber hinaus kann dann der Faserkunststoffverbund einen einheitlichen Matrixwerkstoff mit einheitlichen mechanischen Eigenschaften aufweisen. Insbesondere kann so die Erzeugung eines Kunststoffbereichs aus reaktiven Thermoplasten ermöglicht werden, welcher die Schlagzähigkeit des Faserkunststoffverbunds verbessert.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch einen Lagenaufbau mit einer Kunststofflage,
- Figur 2: schematisch einen Lagenaufbau mit vier Faserlagen und einer Kunststofflage,
- Figur 3: schematisch einen Lagenaufbau mit Monofilamenten aus einem Kunststoff,
- Figur 4: eine Schnittansicht von Figur 3,
- Figur 5: schematisch einen Lagenaufbau mit zwei Lagen aus Kunststoff,
- Figur 6: schematisch einen Lagenaufbau mit zwei Außenlagen aus Kunststoff,
- Figur 7: schematisch einen Aufbau für die Herstellung eines Faserkunststoffverbunds im Infusionsverfahren, und

- Figur 8: schematisch einen Aufbau für die Herstellung eines Faserkunststoffverbunds im Injektionsverfahren.

Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

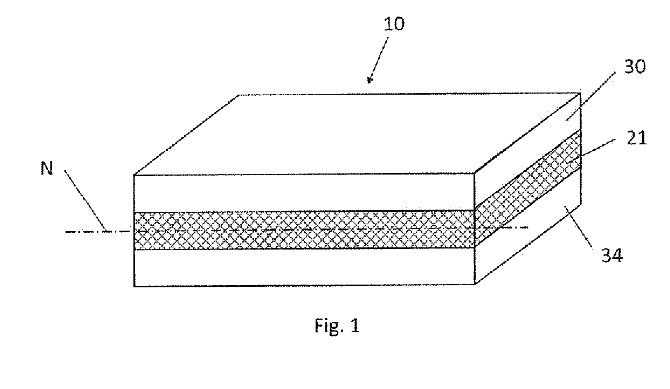

Figur 1 zeigt einen Lagenaufbau 10, dessen Stapelfolge aus einer ersten oberen Faserlage 30, einem lagenförmigen Kunststoffelement 21 und einer ersten unteren Faserlage 34 besteht. Das Kunststoffelement 21 weist hier die Form eines Gewebes auf. Alternativ kann das Kunststoffelement 21 aber auch in Form eines unidirektional gerichteten Geleges, Gitters oder Vollmaterials bereitgestellt sein. Bei den Faserlagen 30, 34 handelt es sich beispielsweise um Glasfaserlagen. Das Kunststoffelement 21 ist beispielsweise anionisches Polyamid6.

Das Kunststoffelement 21 bildet eine mittlere Lage des Lagenaufbaus 10, von welcher aus ein Imprägnieren der ersten oberen Fasserlage 30 sowie der ersten unteren Faserlage 34 bei der Infusion eines Matrixwerkstoffes bereitgestellt werden kann.

Die Anordnung des Kunststoffelements 21 auf der Symmetrieebene des Lagenaufbaus 10 hat zur Folge, dass die Nulllinie N des Lagenaufbaus 10 durch das Kunststoffelement 21 verläuft.

Das Kunststoffelement 21 besteht aus anionischem Polyamid 6. Dieses geht bei der Infusion beziehungsweise Injektion des Matrixwerkstoffs teilweise in Lösung und trägt gemeinsam mit dem Matrixwerkstoff zur Imprägnierung der ersten oberen Faserlage 30 sowie der ersten unteren Faserlage 34 bei.

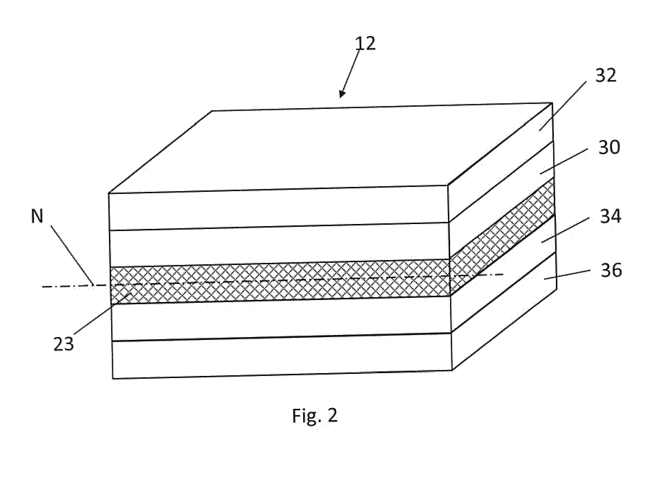

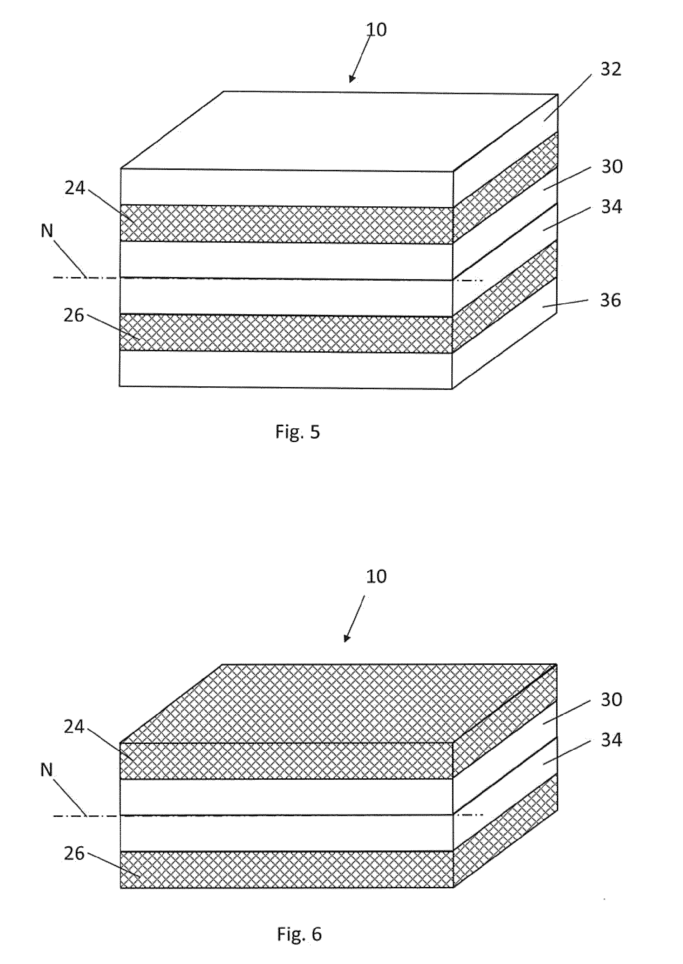

Figur 2 zeigt einen Faserkunststoffverbund 12, der vollständig mit dem Matrixmaterials imprägniert ist. Dessen Stapelfolge besteht aus einer zweiten oberen Faserlage 32, einer ersten oberen Faserlage 30, einem lagenförmigen Kunststoffbereich 23, einer ersten unteren Faserlage 34 und einer zweiten unteren Faserlage 36. Eine Erhöhung der Faserlagenanzahl kann einen dickeren Kunststoffbereich 23, oder, wie in Figur 5 gezeigt, mehrere Kunststoffbereich 23 erfordern. Das Matrixmaterial ist beispielsweise in Form von Caprolactam infusioniert beziehungsweise injiziert worden und liegt in dem Faserkunststoffverbund 12 nach erfolgter Polymerisation in Form von anionischem Polyamid 6 vor. Die Faserlagen können beispielsweise Kohlefasergewebe sein. Der Kunststoffbereich 23 kann zum Beispiel eine homogene Lage aus anionischem Polyamid 6 sein.

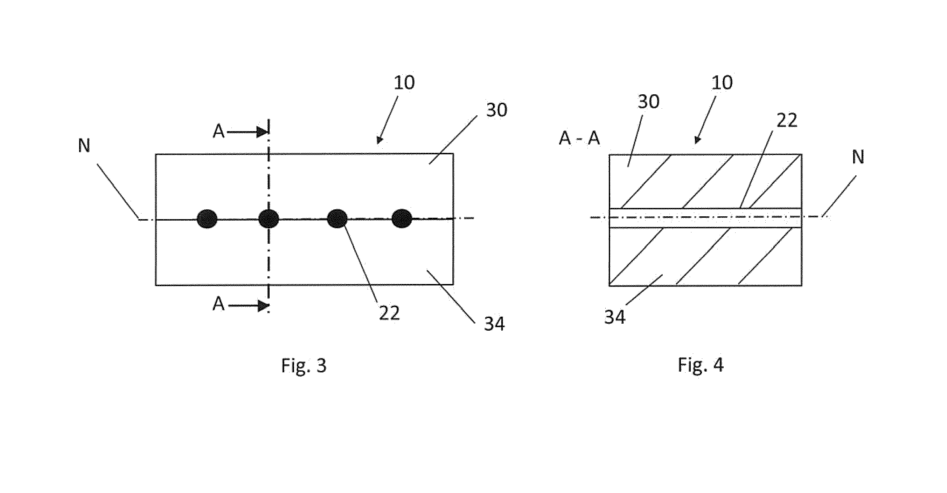

Figur 3 zeigt einen Lagenaufbau 10 mit Kunststoffmonofilamenten 22. Dabei sind die Kunststoffmonofilamente 22 parallel zueinander in regelmäßigem oder unregelmäßigem Abstand zwischen einer ersten oberen Faserlage 30 und einer ersten unteren Faserlage 34 angeordnet. Die Kunststoffmonofilamente 22 sind auf der Symmetrieebene des Faserkunststoffverbunds 10 und somit auf dessen Nulllinie angeordnet. Die Kunststoffmonofilamente 22 können beispielsweise aus Polyamid 6 bestehen. Bei den Faserlagen 30, 34 kann es sich zum Beispiel um ein unidirektionales Glasfasergelege handeln.

Figur 4 zeigt eine Schnittansicht aus Figur 3, welcher zu entnehmen ist, dass die Kunststoffmonofilamente 22 mit der Nulllinie N des Faserkunststoffverbunds 10 zusammenfallen.

Figur 5 zeigt einen Lagenaufbau 10 mit der Stapelfolge einer zweiten oberen Faserlage 32, einem ersten Kunststoffelement 24, einer ersten oberen Faserlage 30, einer ersten unteren Faserlage 34, einem zweiten Kunststoffelement 26 und einer zweiten unteren Faserlage 36. Durch die beiden Kunststoffelemente 24, 26 wird insbesondere die Imprägnierung der daran unmittelbar angrenzenden Faserlagen 32 und 30 beziehungsweise 34 und 36 begünstigt.

Die Kunststoffelemente 24, 26 können beispielsweise aus einem reaktiven Thermoplast bestehen, bevorzugt aus anionischem Polyamid 6. Die Faserlagen 30, 34können zum Beispiel ein unidirektionles 0°-Gelege und Faserlagen 32, 36 ein unidirektionles 90°-Gelege sein.

Figur 6 zeigt einen Lagenaufbau 10 mit der Stapelfolge eines ersten Kunststoffelements 24, einer ersten oberen Faserlage 30, einer ersten unteren Faserlage 34 und eines zweiten Kunststoffelements 26. Entsprechend bilden die beiden Kunststoffelemente 24, 26 die äußeren Lagen des Lagenaufbaus. Bei einem Faserkunststoffverbund mit einem derartigen Lagenaufbau 10 kann den Kunststoffelementen 24, 26 die Funktion eines Schlagschutzes zukommen. Darüber hinaus können die darunterliegenden Faserlagen 30, 34 vor Beschädigungen durch äußere mechanische Beanspruchungen des Faserkunststoffverbunds geschützt werden.

Dabei können die Kunststoffelemente 24, 26 zum Beispiel ein reaktiver Thermoplast sein. Bei den Faserlagen 30, 34 kann es sich beispielsweise um Kohlefasergewebe handeln.

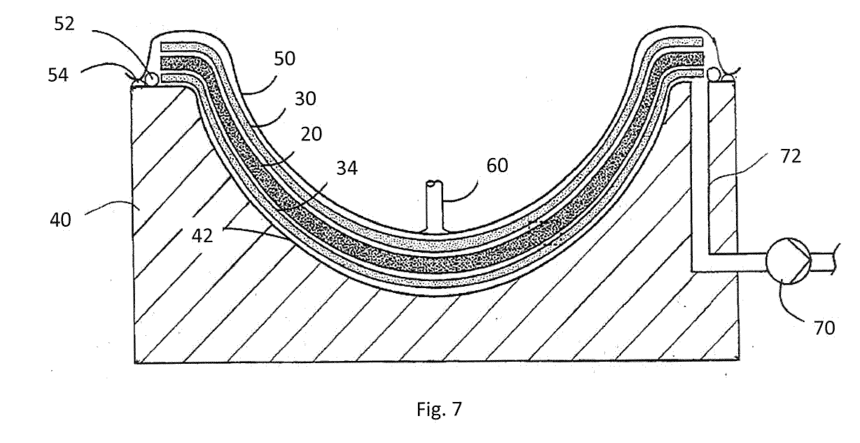

Figur 7 zeigt eine Anordnung der Faserlagen, zum Beispiel Glasfasern, und der Kunststofflage 20, zum Beispiel anionisches Polyamid 6, in einem Werkzeug 40 für das Vakuuminfusionsverfahren. Das Werkzeug 40 weist eine Formoberfläche 42 auf, welche die Geometrie des Negativs des herzustellenden Faserkunststoffverbunds aufweist. Auf die Formoberfläche 42 ist eine erste untere Faserlage 34, eine Kunststofflage 20 und eine erste obere Faserlage 30 gestapelt. Dieses Laminat ist mit einer nicht-haftenden Abdeckfolie 50 abgedeckt. Im Randbereich der Formoberfläche 42 ist eine Dichtungsmasse 52 angeordnet, welche den Bereich unter der Folie gegen die Formoberfläche 42 luftdicht abschließt. Zur Fixierung der Abdeckfolie 50 auf der Formoberfläche 42 ist am Rand der Formoberfläche 42 zusätzlich ein Klebeband 54 bereitgestellt. Der Bereich unterhalb der Abdeckfolie 50 steht mit einem in dem Werkzeug 40 integrierten Luftkanal 72 in Verbindung. Über eine Vakuumpumpe 70 kann somit die Luft aus dem Bereich unterhalb der Abdeckfolie 50 über den Luftkanal 72 evakuiert werden. Dadurch kann eine Vorkompaktierung des Lagenaufbaus, bestehend aus der ersten oberen Faserlage 30, der Kunststofflage 20 und der ersten unteren Faserlage 34, erreicht werden. Insbesondere kann dadurch verhindert werden, dass innerhalb des Faserverbundkunststoffs Fehlstellen durch Lufteinschlüsse entstehen.

Anschließend wird der zuvor erhitzte Matrixwerkstoff, zum Beispiel Caprolactam, über einen Anguss 60 durch eine dafür vorgesehene Öffnung in der Abdeckfolie 50 in das trockene Fasermaterial und die trockene Kunststofflage 20 gesaugt. Die Fließfront des Matrixwerkstoffs kann sich durch teilweises in Lösung gehen der Kunststofflage 20 entlang dieser ausbreiten. Dabei kann die Kunststofflage 20 erheblich zur Erhöhung der Ausbreitungsgeschwindigkeit der Fließfront beitragen.

Nach der vollständigen Imprägnierung der ersten oberen Faserlage 30 und der ersten unteren Fasserlage 34 liegt ein Faserkunststoffverbund 12 gemäß Figur 2 vor.

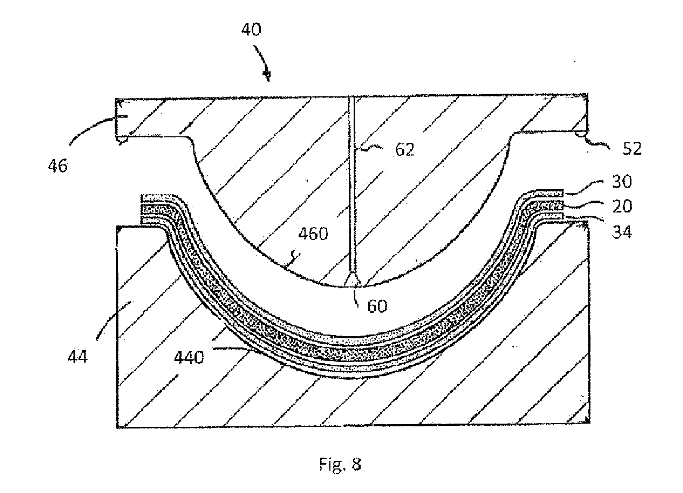

Figur 8 zeigt eine Anordnung der Faserlagen, zum Beispiel aus Kohlefasern, und der Kunststofflage 20, zum Beispiel anionisches Polyamid 6, in einem geöffnetem Werkzeug 40, welches aus einem Werkzeugunterteil 44 und einem Werkzeugoberteil 46, für Injektionsverfahren, insbesondere für RTM, RTM light, VA RTM und DP RTM, besteht. Das Werkzeugunterteil 44 weist eine Werkzeugoberfläche 440 und das Werkzeugoberteil 46 weist eine Werkzeugoberfläche 460 auf. Die Werkzeugoberflächen 440 und 460 weisen die Geometrie des Negativs des herzustellenden Faserkunststoffverbunds auf. Auf die Werkzeugoberfläche 440 des Werkzeugunterteil 44 ist eine erste untere Faserlage 34, eine Kunststofflage 20 und eine erste obere Faserlage 30 gestapelt. Im geschlossenen Zustand schließt die Werkzeugoberteiloberfläche 460 an die erste obere Faserlage 30 an. Im Randbereich der Werkzeugoberfläche 460 ist umlaufend eine Dichtungsmasse 52 angeordnet, welche den Bereich zwischen dem Werkzeugunterteil 44 und dem Werkzeugoberteil 46 gegen die Werkzeugoberflächen 440 luftdicht abschließen kann.

Über einen im Werkzeugoberteil 46 integrierten Anguss 60 kann durch mindestens einen Angusskanal 62 ein Matrixwerkstoff, zum Beispiel ein Thermoplast, bevorzugt Caprolactam, volumenstrom- oder druckkonstant in die Werkzeugkavität injiziert werden. Die Fließfront des Matrixwerkstoffs kann sich durch teilweises in Lösung gehen der Kunststofflage 20 entlang dieser ausbreiten. Dabei kann die Kunststofflage 20 erheblich zur Erhöhung der Ausbreitungsgeschwindigkeit der Fließfront beitragen.
Nach der vollständigen Imprägnierung der ersten oberen Faserlage 30 und der ersten unteren Fasserlage 34 liegt ein Faserkunststoffverbund 12 gemäß Figur 2 vor.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste:

- 10: Lagenaufbau
- 12: Faserkunststoffverbund

- 20: Kunststofflage
- 22: Kunststoffmonofilament
- 23: Kunststoffbereich
- 24: Erste Kunststofflage
- 26: Zweite Kunststofflage

- 30: Erste obere Faserlage
- 32: Zweite obere Faserlage
- 34: Erste untere Faserlage
- 36: Zweite untere Faserlage

- 40: Werkzeug
- 42: Formoberfläche
- 44: Werkzeugunterteil
- 440: Werkzeugoberfläche
- 46: Werkzeugoberteil
- 460: Werkzeugoberfläche

- 50: Abdeckfolie
- 52: Dichtungsmasse
- 54: Klebeband

- 60: Anguss
- 62: Angusskanal

- 70: Vakuumpumpe
- 72: Luftkanal
- N: Nulllinie

## Patentansprüche

1. Faserkunststoffverbund (10), welcher mindestens eine Faserlage (30, 32, 34, 36), einen Matrixwerkstoff und mindestens einen Kunststoffbereich (23) umfasst,
**dadurch gekennzeichnet, dass**
der Kunststoffbereich (23) aus einem thermoplastischen Kunststoff besteht.

2. Faserkunststoffverbund (12) gemäß Anspruch 1, **dadurch gekennzeichnet, dass** der Matrixwerkstoff thermoplastischen Kunststoff, bevorzugt ein reaktiver thermoplastischer Kunststoff, besonders bevorzugt Polyamid, ganz besonders bevorzugt anionisches Polyamid 6 ist.

3. Faserkunststoffverbund (12) gemäß Anspruch 1 oder 2, **dadurch gekennzeichnet, dass** mindestens ein Kunststoffbereich (23) zwischen mindestens zwei Faserlagen (30, 32, 34, 36) angeordnet ist.

4. Faserkunststoffverbund (12) gemäß einem der vorhergehenden Ansprüche, **dadurch gekennzeichnet, dass** die Nulllinie (N) des Faserkunststoffverbunds (12) durch einen Kunststoffbereich (23) verläuft, bevorzugt durch das Zentrum des Kunststoffbereichs (23).

5. Faserkunststoffverbund (10) gemäß einem der Ansprüche 1, 2 oder 4, **dadurch gekennzeichnet, dass** der Kunststoffbereich (23) an einem außenliegenden Bereich des Faserkunststoffverbunds (12) angeordnet ist.

6. Faserkunststoffverbund (12) gemäß einem der vorhergehenden Ansprüche, **dadurch gekennzeichnet, dass** der Kunststoffbereich (23) eine eigene Lage des Faserkunststoffverbunds (12) bildet, wobei der Kunststoffbereich (23) bevorzugt eine homogene Lage ist.

7. Faserkunststoffverbund (12) gemäß einem der vorhergehenden Ansprüche, **dadurch gekennzeichnet, dass** der Kunststoffbereich (23) den Matrixwerkstoff und das Kunststoffelement (21) umfasst.

8. Lagenaufbau (10) zur Herstellung eines Faserkunststoffverbunds (12) gemäß einem der Ansprüche 1 bis 7, wobei der LageAnaufbau (10) mindestens eine Faserlage (30, 32, 34, 36) und mindestens ein Kunststoffelement (21) umfasst,
**dadurch gekennzeichnet, dass**
das Kunststoffelement (21) ein Thermoplast ist.

9. Lagenaufbau (10) gemäß Anspruch 8, **dadurch gekennzeichnet, dass** das Kunststoffelement (21) ein Vollmaterial, UD-Gelege, Gitter, Gewirk, bevorzugt Abstandsgewirk, Gestrick, Geflecht und/oder ein Gewebe ist.

10. Lagenaufbau (10) gemäß Anspruch 8, **dadurch gekennzeichnet, dass** das Kunststoffelement (21) aus mindestens einem Monofilament (22) besteht.

11. Lagenaufbau (10) gemäß Anspruch 8 oder 9, **dadurch gekennzeichnet, dass** das Kunststoffelement (21) eine eigene Lage des Lagenaufbaus (10) bildet.

12. Lagenaufbau (10) gemäß einem der Ansprüche 8 bis 11, **dadurch gekennzeichnet, dass** das Kunststoffelement (21) einen reaktiven Thermoplast, bevorzugt Polyamid, besonders bevorzugt anionisches Polyamid 6 aufweist.

13. Lagenaufbau (10) gemäß einem der Ansprüche 8 bis 12, **dadurch gekennzeichnet, dass** das Kunststoffelement (21) Polymere, organische oder anorganische Füllstoffe und/oder Verstärkungsstoffe umfasst.

14. Lagenaufbau (10) gemäß einem der Ansprüche 8 bis 13, **dadurch gekennzeichnet, dass** das Kunststoffelement faserförmige Füllstoffe und/oder Verstärkungsstoffe umfasst.

15. Verfahren zur Herstellung eines Faserkunststoffverbunds (12), bevorzugt gemäß den Ansprüchen 1 bis 7, mit einem thermoplastischen Kunststoffbereich (23), die Schritte umfassend:
Einbringen eines Lagenaufbaus (10) gemäß einem der Ansprüche 8 bis 14 in eine Form, und
Imprägnieren des Lagenaufbaus (10) mit einem thermoplastischen Matrixwerkstoff.

16. Verfahren gemäß Anspruch 15, **dadurch gekennzeichnet, dass** der Lagenaufbau mit Caprolactam imprägniert wird, bevorzugt infusioniert oder injiziert wird.

17. Verfahren gemäß Anspruch 15 oder 16, **dadurch gekennzeichnet, dass** ein Kunststoffelement (21) des Lagenaufbaus (10) mit dem Matrixwerkstoff ganz oder teilweise in Lösung geht.

18. Verfahren gemäß einem der Ansprüche 15 bis 17, **dadurch gekennzeichnet, dass** mindestens ein Kunststoffelement (21) und der Matrixwerkstoff so gewählt sind, dass sie aus dem gleichen Material bestehen.
